# EUROPEAN PATENT SPECIFICATION

(11) **EP 4 273 433 B1**
(45) Date of publication and mention of the grant of the patent: **30.10.2024**
(21) Application number: 23168835.9
(22) Date of filing: 19.04.2023
(51) Int. Cl.: F16L 23/16, F16J 15/12, F16L 23/18

(54) **FLUID LINE COMPONENT WITH AXIAL SEAL**
FLUIDLEITUNGSBAUTEIL MIT AXIALER DICHTUNG
COMPOSANT DE CONDUITE DE FLUIDE À JOINT AXIAL

(30) Priority: 04.05.2022 DE 102022110971
(43) Date of publication of application: 08.11.2023
(73) Proprietor: Valeo Powertrain GmbH, 96106 Ebern (DE)
(72) Inventor: SPERBER, Christian, Ebern (DE); OSTROHOV, Dimitri, Ebern (DE); STEINMETZ, Harry, Ebern (DE)
(74) Representative: Valeo Powertrain Systems

(56) References cited:
- DE-A1- 2 126 740
- NL-A- 7 500 619
- US-A1- 2009 295 155
- US-A1- 2021 108 726

## Description

The invention relates to a fluid line component with a fluid duct according to claim 1, a sealing surface which surrounds the outlet of the fluid duct on an outer side of the fluid line component, and an axial seal which bears against the sealing surface and can be brought to bear against an opposite surface of a mating piece in order to connect the fluid duct leaktightly to a duct in the mating piece. Related components are known from US2021/108726, DE2126740A or US2009/295155.

The function of the axial seal consists in particular in bridging the spacing between the sealing surface and the opposite surface on the mating piece and feeding the fluid flow, sealed from the fluid duct, into the duct in the mating piece, and vice versa.

The object of the invention consists in providing a fluid line component which ensures with minimal effort a reliable seal even in the case of relatively high tolerances in terms of the spacing between the sealing surface and the opposite surface.

In order to achieve this object, in the case of a fluid line component of the type mentioned at the beginning, it is provided according to the invention that the axial seal has a support and a sealing element which is assembled on the support, wherein the support can be displaced relative to the sealing surface. The sealing element has the deformability required in order to be deformed in the axial direction to such an extent that the sealing element is clamped between the sealing surface and the mating surface at all times with sufficient pretension irrespective of the actual tolerances. The support ensures here that the sealing element cannot deform to an excessive extent and is held in the desired position for every tolerance situation.

According to one embodiment, it is provided that the sealing surface is arranged recessed in an end side of the fluid line component. The support is here held inside a peripheral shoulder into which the axial seal is inserted. In order to provide the desired elastic deformation of the axial seal, the support has a height which is less than the height of the axial seal in the undeformed state.

According to an alternative embodiment, it is provided that the sealing surface is arranged at a projecting connection piece of the fluid line component. In this case, the support can overlap the connection piece externally and guide the seal as a result. Accordingly, the support is configured to be higher in the axial direction than the seal in the undeformed state.

The sealing element is preferably pre-assembled on the sealing surface such that, when the fluid line component is mounted, it does not need to be fixed separately on the mating piece.

For this purpose, it can be provided that the sealing element is engaged behind a holding element which is provided on the fluid line component. The mechanical engaged connection formed in this way enables the axial seal to be pre-assembled with minimal effort, namely by it being pressed simply against the sealing surface provided to receive it.

According to a preferred embodiment, it is provided that the support is annular. The annular shape ensures the highest possible degree of stability when an elevated or reduced pressure acts on the support.

At least one outer edge of the support is preferably configured so that it is bevelled or rounded on a side facing the sealing element such that there are no sharp edges present which could damage the sealing element.

According to an embodiment of the invention, the fluid duct is an intake duct, wherein the support is arranged inside the sealing element. The reduced pressures which exist inside the axial seal during the operation of the fluid line component ensure that the sealing element is pressed firmly against the support and is supported by the latter. There is therefore no risk of the sealing element becoming detached from the support.

According to an alternative embodiment, it is provided that the fluid duct is a pressure duct, wherein the support is arranged outside the sealing element. In this embodiment too, the pressures acting during operation ensure that the sealing element is pressed firmly against the support which mechanically stabilizes the sealing element as a result. Here too, there is no risk of the sealing element becoming detached from the support.

The sealing element is preferably designed as annular and has two sealing lips which protrude radially at radially opposite ends of the sealing element. The sealing lips ensure the desired local surface pressure by which the sealing element reliably forms a seal at the sealing surface or the mating element.

The sealing lips preferably project axially from the support such that the axially required contact pressure is achieved.

The fluid line component according to the invention can in particular be a hydraulic pump, wherein the mating piece is a receptacle in a housing of a fluid storage tank. During mounting, the pump can be inserted into the receptacle with pre-assembled axial seals such that during the mounting the desired pretensioning of the axial seals is achieved there. At the same time, the axial seals are configured such that any mounting tolerances can be absorbed. This ensures that, irrespective of the tolerance situation, the axial contact pressure prevailing in each case does exceed or fall below the limits within which the axial seal reliably forms a seal.

The invention will be described below on the basis of various embodiments, which are illustrated in the appended drawings. In the drawings:
- Figure 1 schematically shows an assembly according to the invention with a fluid line component which is assembled in a mating piece;
- Figure 2 shows on an enlarged scale the portion II from Figure 1, wherein an axial seal according to an embodiment is shown in a first installed state;
- Figure 3 shows the seal from Figure 2, wherein the axial seal displays a greater spacing between the two components between which it is arranged;
- Figure 4 shows the seal from Figure 2, wherein a smaller spacing exists between the two components than in Figure 2;
- Figure 5 shows the seal from Figure 2 on an enlarged scale;
- Figure 6 shows a second embodiment of the axial seal;
- Figure 7 shows a third embodiment of the axial seal;
- Figure 8 shows the seal from Figure 7 in a different mounting situation;
- Figure 9 shows an alternative embodiment of the support; and
- Figure 10 shows the embodiment of an undercut for fixing the seal on an enlarged scale.

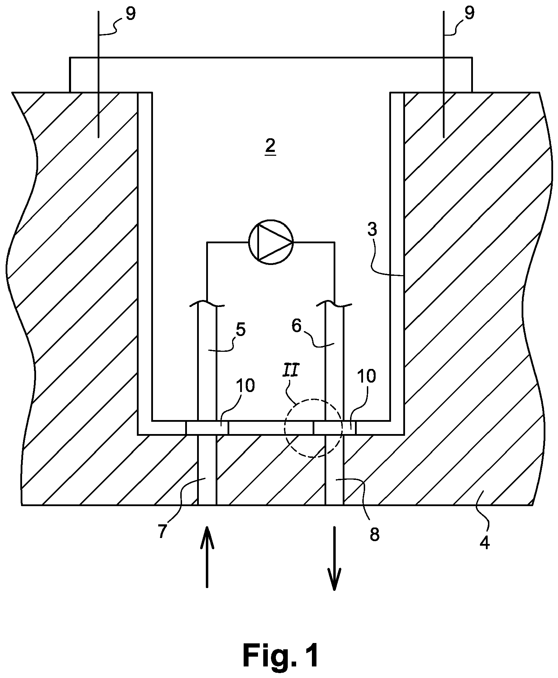

A fluid line component 2 is shown in Figure 1 which is a hydraulic pump in the exemplary embodiment shown.

The fluid line component 2 is assembled in a receptacle 3 of a mating piece 4. The mating piece 4 is in this case a housing of a fluid storage tank. The fluid storage tank can be part of a gearbox housing, etc.

The fluid line component 2 has two fluid ducts 5, 6, the fluid duct 5 of which is an intake duct and the fluid duct 6 a pressure duct.

The mating piece 4 has a duct 7 which is associated with the intake duct 5, and a duct 8 which is associated with the pressure duct 6.

The fluid line component 2 is screwed to the mating piece 4 (see the schematically illustrated screw connections 9), wherein that side of the fluid line component 2 which is arranged inside the receptacle 3 is situated opposite the base of the receptacle 3. Axial seals 10, which connect the fluid ducts 5, 6 leaktightly to the ducts 7, 8 assigned to them, are provided there.

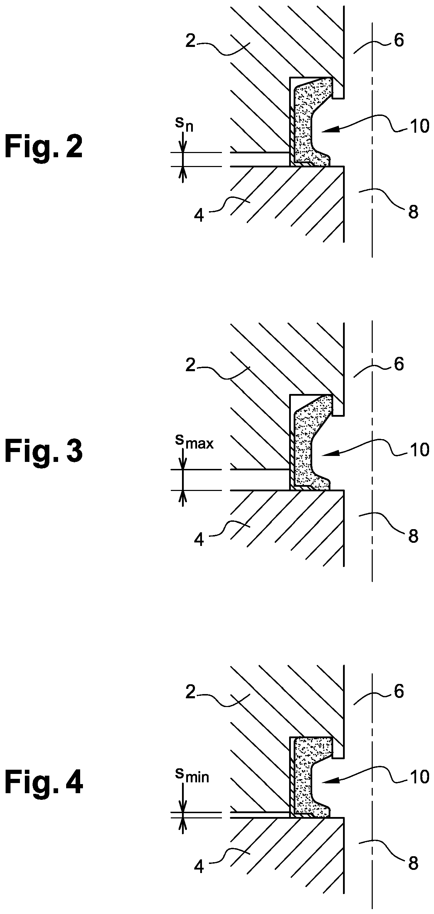

One of the axial seals 10, namely the one on the pressure side of the hydraulic pump, is shown in Figure 2 in a state in which the spacing between the end side of the fluid line component 2 and the base of the receptacle 3 corresponds to a nominal value. The gap is designated here as sₙ. In this state, the axial seal 10 bears with the desired pretension both against the fluid line component 2 and against the mating piece 4 such that a seal is reliably formed in the region of the transition from the pressure duct 6 in the fluid line component 2 to the duct 8 in the mating piece 4.

The seal from Figure 2 is shown in Figure 3 in a state in which the spacing corresponds to a maximum value sₘₐₓ. Because of the dimensioning of the axial seal 10, in this state too there is still a sufficient contact pressure such that the axial seal 10 reliably seals off the transition from the pressure duct 6 to the duct 8.

A state is shown in Figure 4 in which the spacing between the fluid line component 2 and the mating piece 4 corresponds to a minimum value sₘᵢₙ. The axial seal 10 is here pressed together further axially, wherein it has sufficient space to expand such that it is not excessively compressed.

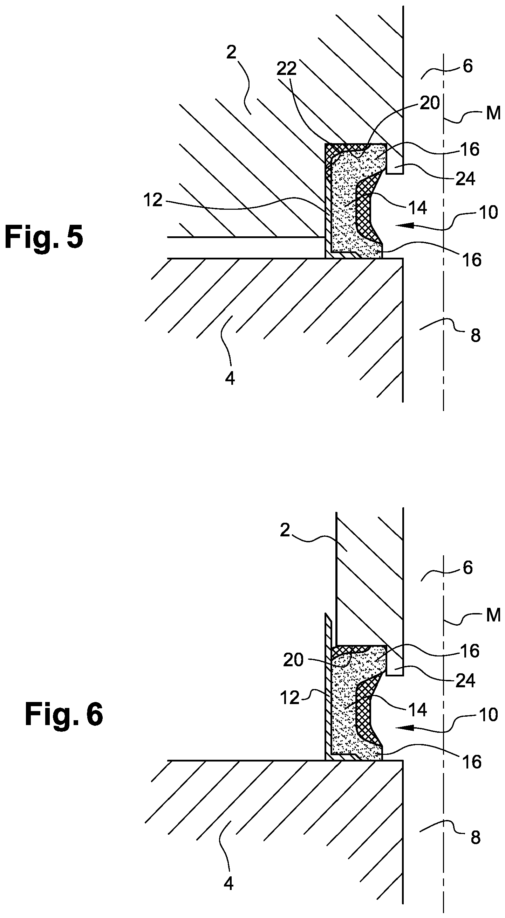

The axial seal 10 will be described below with the aid of Figure 5 for the use case on the pressure side of the fluid line component, i.e. for the side on which an elevated pressure prevails in the fluid line component.

The axial seal 10 has an overall annular structure, wherein it has a support 12 and a sealing element 14. The support 12 has an
L-shaped cross-section with a leg which forms a cylindrical surface concentric with the centre axis of the seal, and a leg which forms an annular surface extending radially with respect to the centre axis.

Metal or a sufficiently rigid plastic can be used as the material for the support 12.

The sealing element 14 preferably consists of an elastomer and has a central section which is held on the support 12, and two sealing lips 16 which project both radially and axially from the support 12 on sides of the sealing element which face away from each other.

The sealing element 14 is attached to the support 12 such that the sealing element 14 cannot be detached from the support 12 during transport and handling. For example, the dimensions of the sealing element 14 relative to the dimensions of the support 12 can be selected such that the sealing element 14 is fastened on the support 12 solely by virtue of the frictional forces which exist in the assembled state. The sealing element 14 can, however, also be firmly bonded, vulcanized, etc. to the support 12.

A sealing surface 20, which is provided concentrically with the centre axis M of the fluid duct 6, is provided in the fluid line component 2 in order to hold the axial seal 10. The sealing surface 20 is configured to be recessed in the fluid line component 2 such that a step 22 is provided in which the support 12 is guided. One of the sealing lips 16 bears against the sealing surface 20 as a result.

On the radially inner situated side, a holding element 24, in the form of a peripheral collar which is provided with an undercut at its axial end, projects from the sealing surface 20. The sealing lip 16 assigned to the sealing surface 20 engages behind it such that the axial seal 10 can be pre-assembled on the fluid line component 2.

It is also possible to fasten the axial seal 10 only by means of an oversized fit between the sealing element and the holding element 24, i.e. by a clamping effect. This has the advantage that it is possible to dispense with the undercut which is challenging from a manufacturing point of view.

Two cross-hatched regions are shown in Figure 5 into which the sealing element 14 can deform in the case of different stresses.

The sealing element 14 is deformed into the region situated radially outside the sealing element 14 when high pressures exist inside the fluid duct. The sealing element is deformed into the region situated radially inside the sealing element 14 when the spacing between the fluid line component 2 and the mating piece 4 is very small.

The two legs of the support 12 are in each case configured as bevelled or rounded at their free ends such that the sealing element 14 can bear lightly there and, when it is deformed, can bear, uniformly supported, against the step 22 and the corresponding surface of the mating piece 4.

The sealing lips have a self-reinforcing effect because the pressure acting inside the sealing element presses it against the sealing surface 20 and the mating surface on the mating piece 4. As the pressure increases, the contact force of the sealing lips 16 on the fluid line component 2 and on the mating piece 4 also increases such that a reliable seal is ensured.

The force exerted as a whole on the support by the sealing lips 16 and the sealing element 14 also causes the support 12 to be pressed more strongly against the step 22 and the mating piece 4 as the pressures increase. As a result, it is ensured that no extrusion gap, into which the sealing element 14 could be pressed, can be formed between the support 12 and the surfaces on the fluid line component 2 and the mating piece 4 on which the support 12 is supported. As a result, the possibility that the sealing element 14 might be damaged by repeated deformation into an extrusion gap is prevented.

Figure 6 shows a second embodiment. The same reference signs are used for the first embodiment shown in Figure 5, and, in this respect, reference is made to the explanations above.

The difference between the embodiment in Figure 6 and that in Figure 5 consists in that fact that, in the case of the embodiment in Figure 6, the sealing surface 20 is not configured as recessed in the fluid line component 2 and instead represents an end surface of a protruding connection piece.

The difference between the first and the second embodiment consists in particular in the configuration of the leg of the support 12 which forms the cylindrical surface configured concentrically with respect to the centre axis M. Whilst in the embodiment in Figure 5, this leg is shorter than the axial height of the sealing element 14, in the embodiment in Figure 6, this leg projects axially from the corresponding sealing lip 16 of the sealing element 14. The leg here overlaps the connection piece such that the axial seal 10 is guided radially on the connection piece by means of the support 12. A sliding guide is formed here which can absorb the axial tolerances.

The sliding guide is dimensioned with regard to the existing gap such that the sealing element 14 cannot be pressed into the gap in the case of the pressures which occur.

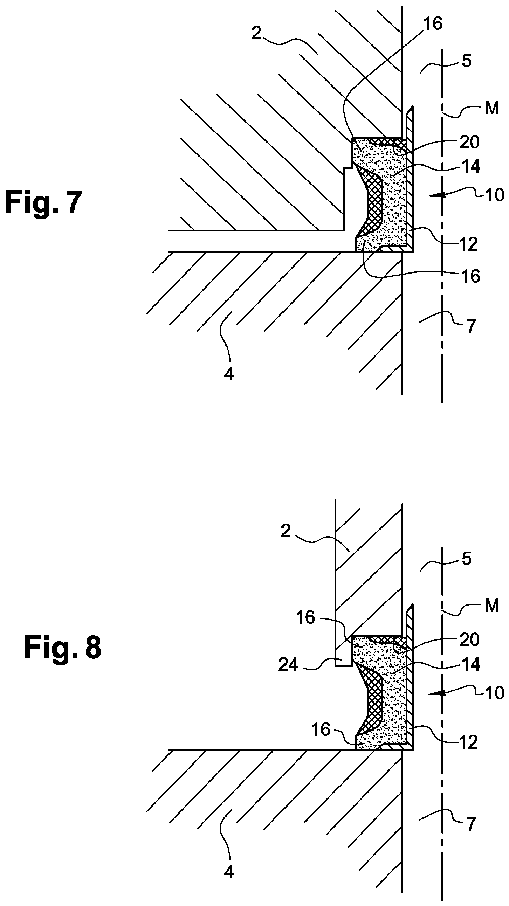

Figure 7 shows a third embodiment. The same reference signs are used for the components known from the preceding embodiments, and, in this respect, reference is made to the explanations above.

The embodiment in Figure 7 is a combination of the embodiments in Figures 5 and 6. The sealing surface 20 is configured, similarly to the embodiment in Figure 5, so that it is recessed in the fluid line component 2, whilst the support 12 projects with one leg from the end of the sealing element 14 and forms a sliding guide with the neighbouring surfaces of the fluid line component 2, in this case with the inner surface of the fluid duct 5. In contrast to the first and second embodiment, the axial seal 10 in the third embodiment serves to seal the intake duct 5 (i.e. in the case of a reduced pressure) such that the support 12 is arranged radially inside the sealing element 14.

Also in the third embodiment, a radial undercut can be used with which the sealing lip 16 associated with the sealing surface 20 engages inside the receptacle in the fluid line component 2.

Figure 8 shows a fourth embodiment. The same reference signs are used for the features known from the preceding embodiments, and, in this respect, reference is made to the explanations above.

The difference between the third and the fourth embodiment consists in the sealing surface 20 in the fluid line component 2 being provided not on the base of a receptacle or recess for the axial seal 10 and instead forms an end side of a connection piece. The axial seal 10 is assembled on the latter such that the leg of the support 12 situated on the inside projects into the fluid duct 5 and in this way ensures radial guidance of the axial seal 10.

Here too, a holding element 24 is provided which forms a radial undercut behind which one of the sealing lips 16 of the sealing element 14 engages mechanically. The axial seal 10 is pre-assembled on the fluid line component 2 as a result.

According to a development which is not illustrated, an additional elastic element, which stresses the sealing lips in opposite directions in order to increase the contact force and hence the sealing effect, is provided on the axial seal 10. The elastic element can consist, for example, of spring steel and be formed in a similar fashion to those which are known from radial shaft sealing rings.

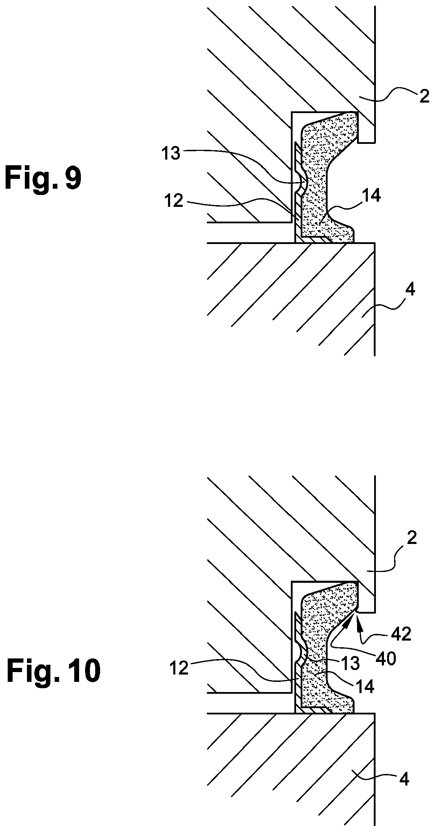

Shown in Figure 9 is a variant of the axial seal 10 which differs from the preceding embodiments in that the support 12 is provided with a local deformation 13, for example a rib or bead. As a result, in the starting state the support 12 bears against the sealing element 14 with a smaller surface. The advantage is better deformability of the sealing element 14, specifically when effecting a large tolerance compensation.

Alternatively, a mating contour, corresponding to the contour of the support, can be provided in the sealing element such that the rib or bead of the support engages here mechanically.

As a further option, a mechanical undercut could here create more flexibility because the sealing element 14, when compressed, can easily adapt to / fit snugly against the undercut contour of the support 12.

The undercut 40, behind which the sealing element 14 can be locked on the holding element 24, is shown at an enlarged scale in Figure 10. A bevel 42 can also be seen on the outside of the undercut 40 which serves for the improved assemblability of the sealing element 14. The bevel can be used in all variants in order to improve the assemblability.

## Claims

1. Fluid line component (2) with a fluid duct (5, 6), a sealing surface (20) which surrounds the outlet of the fluid duct (5, 6) on an outer side of the fluid line component (2), and an axial seal (10) which bears against the sealing surface (20) and can be brought to bear against an opposite surface of a mating piece (4) in order to connect the fluid duct (5, 6) leaktightly to a duct (7, 8) in the mating piece (4), wherein the axial seal (10) has a support (12) and a sealing element (14) which is assembled on the support (12), wherein the support (12) can be displaced relative to the sealing surface (20), **characterized in that** the support (12) has an L-shaped cross-section with a leg which forms a cylindrical surface concentric with the centre axis of the seal, and a leg which forms an annular surface extending radially with respect to the centre axis.

2. Fluid line component according to claim 1, **characterized in that** the sealing surface (20) is arranged recessed in an end side of the fluid line component (2).

3. Fluid line component according to claim 1, **characterized in that** the sealing surface (20) is arranged at a projecting connection piece of the fluid line component (2).

4. Fluid line component according to one of the preceding claims, **characterized in that** the sealing element (14) is pre-assembled on the sealing surface (20).

5. Fluid line component according to claim 4, **characterized in that** the sealing element (14) is fastened behind a holding element (24) which is provided on the fluid line component (2), in particular is clamped or is engaged behind an undercut.

6. Fluid line component according to one of the preceding claims, **characterized in that** the support (12) is annular.

7. Fluid line component according to one of the preceding claims, **characterized in that** at least one outer edge of the support (12) is configured so that it is bevelled or rounded on a side facing the sealing element (14).

8. Fluid line component according to one of the preceding claims, **characterized in that** the fluid duct (5) is a suction duct and the support (12) is arranged inside the sealing element (14).

9. Fluid line component according to one of claims 1 to 7, **characterized in that** the fluid duct (6) is a pressure duct and the support (12) is arranged outside the sealing element (14).

10. Fluid line component according to one of the preceding claims, **characterized in that** the sealing element (14) is annular and has two sealing lips (16) which protrude radially at axially opposite ends of the sealing element (14).

11. Fluid line component according to claim 10, **characterized in that** the sealing lips (16) project axially from the support (12).

12. Assembly with a fluid line component according to one of the preceding claims, **characterized in that** the fluid line component (2) is a hydraulic pump and the mating piece (4) a receptacle in a housing of a fluid storage tank.

## Patentansprüche

1. Fluidleitungsbauteil (2) mit einem Fluidkanal (5, 6), einer Dichtfläche (20), die den Auslass des Fluidkanals (5, 6) auf einer Außenseite des Fluidleitungsbauteils (2) umgibt, und einer axialen Dichtung (10), die gegen die Dichtfläche (20) anliegt und gegen eine gegenüberliegende Fläche eines Gegenstücks (4) zur Anpressung gebracht werden kann, um den Fluidkanal (5, 6) dicht mit einem Kanal (7, 8) im Gegenstück (4) zu verbinden, wobei die axiale Dichtung (10) einen Träger (12) und ein auf dem Träger (12) montiertes Dichtelement (14) aufweist, wobei der Träger (12) relativ zur Dichtfläche (20) verschiebbar ist, **dadurch gekennzeichnet, dass** der Träger (12) einen L-förmigen Querschnitt mit einem Schenkel, der eine zur Mittelachse der Dichtung konzentrische zylindrische Fläche bildet, und einem Schenkel aufweist, der eine sich radial zur Mittelachse erstreckende ringförmige Fläche bildet.

2. Fluidleitungsbauteil nach Anspruch 1, **dadurch gekennzeichnet, dass** die Dichtfläche (20) vertieft in einer Stirnseite des Fluidleitungsbauteils (2) angeordnet ist.

3. Fluidleitungsbauteil nach Anspruch 1, **dadurch gekennzeichnet, dass** die Dichtfläche (20) an einem vorstehenden Anschlussstück des Fluidleitungsbauteils (2) angeordnet ist.

4. Fluidleitungsbauteil nach einem der vorhergehenden Ansprüche, **dadurch gekennzeichnet, dass** das Dichtelement (14) auf der Dichtfläche (20) vormontiert ist.

5. Fluidleitungsbauteil nach Anspruch 4, **dadurch gekennzeichnet, dass** das Dichtelement (14) hinter einem am Fluidleitungsbauteil (2) vorgesehenen Halteelement (24) befestigt, insbesondere eingeklemmt oder hinter einem Hinterschnitt eingerastet, ist.

6. Fluidleitungsbauteil nach einem der vorhergehenden Ansprüche, **dadurch gekennzeichnet, dass** der Träger (12) ringförmig ist.

7. Fluidleitungsbauteil nach einem der vorhergehenden Ansprüche, **dadurch gekennzeichnet, dass** mindestens eine Außenkante des Trägers (12) auf einer dem Dichtelement (14) zugewandten Seite abgeschrägt oder abgerundet ausgebildet ist.

8. Fluidleitungsbauteil nach einem der vorhergehenden Ansprüche, **dadurch gekennzeichnet, dass** der Fluidkanal (5) ein Saugkanal ist und der Träger (12) innerhalb des Dichtelements (14) angeordnet ist.

9. Fluidleitungsbauteil nach einem der Ansprüche 1 bis 7, **dadurch gekennzeichnet, dass** der Fluidkanal (6) ein Druckkanal ist und der Träger (12) außerhalb des Dichtelements (14) angeordnet ist.

10. Fluidleitungsbauteil nach einem der vorhergehenden Ansprüche, **dadurch gekennzeichnet, dass** das Dichtelement (14) ringförmig ist und zwei Dichtlippen (16) aufweist, die an axial gegenüberliegenden Enden des Dichtelements (14) radial vorstehen.

11. Fluidleitungsbauteil nach Anspruch 10, **dadurch gekennzeichnet, dass** die Dichtlippen (16) axial vom Träger (12) vorstehen.

12. Anordnung mit einem Fluidleitungsbauteil nach einem der vorhergehenden Ansprüche, **dadurch gekennzeichnet, dass** das Fluidleitungsbauteil (2) eine Hydraulikpumpe und das Gegenstück (4) eine Aufnahme in einem Gehäuse eines Fluidvorratsbehälters ist.

## Revendications

1. Composant de conduite de fluide (2) avec un conduit de fluide (5, 6), une surface d'étanchéité (20) qui entoure la sortie du conduit de fluide (5, 6) sur un côté extérieur du composant de conduite de fluide (2), et un joint d'étanchéité axial (10) qui appuie contre la surface d'étanchéité (20) et peut exercer une pression contre une surface opposée d'une pièce d'accouplement (4) afin de raccorder le conduit de fluide (5, 6) de façon étanche aux fuites à un conduit (7, 8) dans la pièce d'accouplement (4), dans lequel le joint d'étanchéité axial (10) a un support (12) et un élément d'étanchéité (14) qui est assemblé sur le support (12), dans lequel le support (12) peut être déplacé relativement à la surface d'étanchéité (20), **caractérisé en ce que** le support (12) a une section transversale en forme de L avec un segment qui forme une surface cylindrique concentrique avec l'axe central du joint d'étanchéité, et un segment qui forme une surface annulaire s'étendant radialement par rapport à l'axe central.

2. Composant de conduite de fluide selon la revendication 1, **caractérisé en ce que** la surface d'étanchéité (20) est agencée en retrait dans un côté d'extrémité du composant de conduite de fluide (2).

3. Composant de conduite de fluide selon la revendication 1, **caractérisé en ce que** la surface d'étanchéité (20) est agencée au niveau d'une pièce de liaison saillante du composant de conduite de fluide (2).

4. Composant de conduite de fluide selon l'une des revendications précédentes, **caractérisé en ce que** l'élément d'étanchéité (14) est préassemblé sur la surface d'étanchéité (20).

5. Composant de conduite de fluide selon la revendication 4, **caractérisé en ce que** l'élément d'étanchéité (14) est fixé derrière un élément de retenue (24) qui est prévu sur le composant de conduite de fluide (2), en particulier est serré ou est engagé derrière un dégagement.

6. Composant de conduite de fluide selon l'une des revendications précédentes, **caractérisé en ce que** le support (12) est annulaire.

7. Composant de conduite de fluide selon l'une des revendications précédentes, **caractérisé en ce qu'**au moins un bord extérieur du support (12) est configuré de telle façon qu'il est biseauté ou arrondi sur un côté faisant face à l'élément d'étanchéité (14).

8. Composant de conduite de fluide selon l'une des revendications précédentes, **caractérisé en ce que** le conduit de fluide (5) est un conduit d'aspiration et le support (12) est agencé à l'intérieur de l'élément d'étanchéité (14).

9. Composant de conduite de fluide selon un des revendications 1 à 7, **caractérisé en ce que** le conduit de fluide (6) est un conduit de pression et le support (12) est agencé à l'extérieur de l'élément d'étanchéité (14).

10. Composant de conduite de fluide selon l'une des revendications précédentes, **caractérisé en ce que** l'élément d'étanchéité (14) est annulaire et a deux lèvres d'étanchéité (16) qui font saillie radialement à des extrémités axialement opposées de l'élément d'étanchéité (14).

11. Composant de conduite de fluide selon la revendication 10, **caractérisé en ce que** les lèvres d'étanchéité (16) font saillie axialement à partir du support (12).

12. Ensemble avec un composant de conduite de fluide selon l'une des revendications précédentes, **caractérisé en ce que** le composant de conduite de fluide (2) est une pompe hydraulique et la pièce d'accouplement (4) un réceptacle dans un logement d'un réservoir de stockage de fluide.
